# EUROPÄISCHE PATENTSCHRIFT

(11) **EP 1 318 343 B1**
(45) Veröffentlichungstag und Bekanntmachung des Hinweises auf die Patenterteilung: **18.01.2006**
(21) Anmeldenummer: 02025215.1
(22) Anmeldetag: 12.11.2002
(51) Int. Cl.: F16L 37/133, F16L 37/12, F16L 37/138

(54) **Steckverbindung**
Connector
Connecteur

(30) Priorität: 04.12.2001 DE 10159280
(43) Veröffentlichungstag der Anmeldung: 11.06.2003
(73) Patentinhaber: Kautex Textron GmbH & Co. KG., 53229 Bonn (DE); VolaPlast Werner-Hoppach KG, 34286 Spangenberg (DE)
(72) Erfinder: Weller, Andreas, 57537 Wissen (DE); Breidenich, Frank, 53115 Bonn (DE); Janssen, Rolf, 64853 Otzberg Hering (DE); Zielinski, Gregor, 53604 Bad Honnef (DE); Moitzheim, Jürgen, 53639 Königswinter (DE); Hofmann, Jürgen, 34212 Melsungen (DE)
(74) Vertreter: Kierdorf, Theodor

(56) Entgegenhaltungen:
- CH-A- 690 338
- US-A- 4 915 421
- US-A- 5 110 013
- US-A- 5 324 081
- US-A- 5 356 181
- US-A- 5 368 275
- US-A- 5 437 650

## Beschreibung

Die Erfindung betrifft eine Steckverbindung für Schlauch- oder Rohrleitungen zum Anschließen und/oder Verbinden von Waschflüssigkeitsleitungen eines Kfz, mit einer Steckaufnahme für einen Anschlusszapfen, wobei der Anschlusszapfen in der Steckaufnahme gegen axial wirkende Kräfte gesichert verrastbar ist.

Solche Steckverbindungen bzw. Kupplungen werden in heutigen Scheibenreinigungsanlagen und Scheinwerferreinigungsanlagen von Kraftfahrzeugen häufig eingesetzt.

Nachteilhaft bei bekannten Kupplungen ist, dass die Rastelemente schwer handhabbar sind. Häufig sind die Waschflüssigkeitsbehälter, Pumpen und dergleichen Bauteile in Kfz nicht frei zugänglich, so dass die Montage bedingt durch nur begrenzt zur Verfügung stehenden Bauraum erschwert ist. Steckverbindungen, die druckstoßdicht ausgelegt sind, beispielsweise für Hochdruck-Scheinwerferreinigungsanlagen, erfordern häufig besonders hohe Montage- bzw. Rastkräfte. Ebensoviel Kraftaufwand ist zum Lösen der bekannten Steckverbindungen erforderlich.

Es sind Steckverbindungen bekannt, die aus einem ersten Kupplungsteil und einem zweiten Kupplungsteil und einem weiteren Rastelement bestehen, wobei das zweite Kupplungsteil in der Regel von dem Rastelement als separates Bauteil gegen einen inneren Rand des ersten, meist topfförmig gestalteten Kupplungsteils vorgespannt wird. Drucknasen des Rastelements durchdringen das erste Kupplungsteil in Ausnehmungen und hintergreifen einen Absatz des zweiten Kupplungsteils. Das Rastelement ist dabei als ebener Teilring gestaltet und beispielsweise aus Federstahl ausgestaltet.

Nachteilig bei dieser bekannten Kupplung ist, dass das Rastelement schwer zu greifen ist. Daher wird meist an der Außenseite des Rastelements eine Lasche befestigt, an der ein Werkzeug angesetzt werden kann. Diese Lasche führt jedoch häufig zu Beschädigungen an daran scheuernden Leitungen und Kabeln. Weiterhin ist zur Entfernung des Rastelements ein Werkzeug erforderlich.

Schließlich sind Kupplungen zur Verbindung von Waschflüssigkeitsleitungen bekannt, auf die im zusammengesteckten Zustand ein C-förmig ausgebildetes Rastelement aufclipsbar ist, das mit Drucknasen das topfförmig ausgebildete Kupplungselement bzw. die Steckaufnahme durchsetzt. Dieses als Teilring ausgebildete Kupplungsteil aus Kunststoff ist mit den Fingern ergreifbar und in die Kupplung eindrückbar sowie durch Drehen wieder lösbar.

Eine solche Kupplung ist mit dem Nachteil behaftet, dass zunächst beim Ineinanderstecken der Kupplungsteile in Einschubrichtung kein Einschubwiderstand vorhanden ist und kein hörbares Einrasten oder Einschnappen der Verbindung stattfindet. Zudem ist ein weiterer Handgriff zur Fixierung des Rastelements erforderlich. Dadurch dass außerordentlich geringe Kräfte zum Ineinanderfügen der Kupplungsteile erforderlich sind, ist die Kontrolle des dichtenden Sitzes der Kupplungsteile ineinander erschwert. Aus der US-PS 5,110,013 ist eine Steckverbindung für Schlauchleitungen bekannt, die als Schnellkupplung zum Anschließen einer Schlauchleitung an einen Behälter oder Kanister ausgebildet ist. Zu diesem Zweck ist der Behälter mit einem Fitting versehen, auf die der an dem Schlauch befindliche Kupplungsteil der Verbindung aufgesteckt wird. Der an dem Schlauch vorgesehene Kupplungsteil der Verbindung ist als Steckaufnahme ausgebildet, die auf der dem Fitting zugewandten Seite federelastische Rastzungen aufweist. Die Rastzungen sind innenseitig jeweils mit Rastvorsprüngen versehen, die in der verriegelten Stellung der Steckaufnahme mittels einer axial verschieblichen Sicherungshülse in einer umlaufenden Nut des Fittings gehalten werden. Sowohl zum Einführen des Fittings in die Steckaufnahme als auch zum Lösen desselben aus der Steckaufnahme muss die Sicherungshülse auf der Steckaufnahme verschoben werden. Die Lösung bietet im Hinblick auf die zuvor erwähnten Probleme keine Vorzüge.

Aus der CH 690 338 A5 ist ein Verbindungs- und Anschlussstück für Wellrohre bekannt, dieses umfasst ein Gehäuse mit elastischen Elementen und eine Außenhülse. Die Außenhülse ist für einen Teil des Gehäuses, nämlich dem Gehäusemantel, welcher einen Kernhohlraum umschließt, in axialer Richtung verschiebbar. Die Außenhülse hat gegenüber dem Gehäuse eine Vormontageposition und eine Sperrposition. In der Sperrposition greift eine Rippe des Gehäuses in eine Nut an der Außenhülse ein und die elastischen Elemente halten das Wellrohr in der Montageposition.

Sowohl zur Herstellung der Verbindung als auch zum Lösen der Verbindung muss die Außenhülse auf dem Gehäuse des Anschlussstücks axial verschoben werden. Auch diese Konstruktion bietet im Hinblick auf die vorstehend geschilderten Probleme keine Vorzüge.

Eine weiterhin vergleichbare Steckverbindung ist schließlich aus dem US-Patent 5,356,181 bekannt.

Der Erfindung liegt daher die Aufgabe zugrunde, eine Steckverbindung der eingangs genannten Art hinsichtlich der Handhabung bei der Montage und Demontage zu verbessern. Die Steckverbindung soll weiterhin so ausgelegt sein, dass diese unter Aufbringung von moderaten Fügekräften bzw. Rastkräften zusammensetzbar ist, ohne dass ein weiterer Arbeitsgang zur Sicherung der Verbindung erforderlich wäre.

Die Aufgabe wird gemäß der Erfindung gelöst, durch eine Steckaufnahme für Schlauch- oder Rohrleitungen, zum Anschließen und/oder Verbinden von Waschflüssigkeitsleitungen eines Kfz, mit einer Steckaufnahme für einen Anschlusszapfen, wobei der Anschlusszapfen in der Steckaufnahme gegen axial wirkende Kräfte gesichert verrastbar ist, wobei die Steckaufnahme federelastische oder federbelastete Rastelemente aufweist, die von einer auf der Steckaufnahme axial verschieblich angeordneten Sicherungshülse in einer ersten verriegelten Stellung gehalten werden und die in einer zweiten Stellung der Sicherungshülse ein Einfedern der Rastelemente in eine zurückgezogene Öffnungsstellung ermöglicht, wobei die Rastelemente in der ersten Stellung der Sicherungshülse unter Vorspannung gegen die Innenwandung derselben anliegen und die erste Stellung der Sicherungshülse deren Rast- und Aufnahmestellung für den Anschlusszapfen bildet und wobei ein Einschieben des Anschlusszapfens in der Rast- und Aufnahmestellung der Sicherungshülse aufgrund deren materialbedingter Elastizität unter radialer Verformung derselben möglich ist.

Auf diese Art und Weise wird eine gegen Zugkräfte gesicherte druckstoßfeste Verbindung nur durch Zusammenstecken von Steckaufnahme und Anschlusszapfen unter Aufbringen von moderaten Montagekräften erzielt. Die Steckaufnahme wird durch die Sicherungshülse vor Montage in vorgespannter bzw. vor ausgelöster Raststellung gehalten. Ein Lösen der Verbindung ist nur durch Verschiebung der Sicherungshülse, beispielsweise mittels eines Werkzeugs, möglich. Ein separater Montageschritt zur Sicherung der Verbindung entfällt. Bei Verschiebung des Sicherungshülse werden die Rastelemente freigegeben bzw. federn diese in eine den Querschnitt der Steckaufnahme vollständig freigebende Stellung zurück, so dass die Steckverbindung ohne Kraftaufwand lösbar ist.

Bei einer bevorzugten Ausgestaltung der Steckverbindung gemäß der Erfindung sind als Rastelemente vorzugsweise einstückig mit der Steckaufnahme ausgebildete Federzungen vorgesehen, die jeweils nach außen vorstehende Drucknasen aufweisen. Die Drucknasen liegen in der ersten Stellung der Sicherungshülse unter Vorspannung gegen deren Innenwandung an, so dass die Federzungen in ausgestellter Lage in den Innenquerschnitt der Steckaufnahme vorstehen.

Vorzugsweise ist die Sicherungshülse unverlierbar auf der Steckaufnahme angeordnet.

Hierzu kann die Steckaufnahme beispielsweise einen stirnseitig außen umlaufenden Sicherungskragen aufweisen, der mit einem innen umlaufenden Absatz der Sicherungshülse als axiale Sicherung derselben zusammenwirkt.

Vorzugsweise ist die Steckaufnahme an ihrem Außenumfang mit wenigstens einem Rastvorsprung versehen, der mit Rastnuten der Sicherungshülse zusammenwirkt, die jeweils die Funktionsstellungen der Sicherungshülse festlegen. Hierdurch ist gewährleistet, dass die Sicherungshülse in bezug auf die Steckaufnahme wenigstens zwei definierte Funktionsstellungen einnehmen kann.

Zweckmäßigerweise sind sowohl die Steckaufnahme als auch der Anschlusszapfen mit Axialbohrungen zur Durchleitung eines Fluids versehen.

Bevorzugt weist die Steckaufnahme einen einstückig angeformten Anschlusszapfen auf, der entsprechend dem aufzunehmenden Anschlusszapfen ausgebildet ist.

Bei der bevorzugten Variante der Steckverbindung gemäß der Erfindung ist vorgesehen, dass die Axialbohrung der Steckaufnahme mit einer Durchmesserstufe in einen vorzugsweise zylindrischen Aufnahmebereich mündet.

Im Bereich der Durchmesserstufe der Steckaufnahme kann ein Dichtsitz für den Anschlusszapfen vorgesehen sein. Beispielsweise kann dort ein Dichtring Anlage finden, der mit einem etwa pilzförmig gestalteten Kopf des Anschlusszapfens zusammenwirkt.

Die Erfindung wird nachstehend anhand eines in den Zeichnungen dargestellten Ausführungsbeispiels erläutert.

Es zeigen:
- Fig. 1: Die Steckverbindung gemäß der Erfindung in zusammengesetzter und verrasteter Stellung im Schnitt,
- Fig. 2: einen Schnitt durch die Steckaufnahme der Steckverbindung in Aufnahmestellung,
- Fig. 3: die in Fig. 2 dargestellte Steckverbindung im Schnitt, wobei sich der Sicherungshülse der Steckverbindung in Offenstellung befindet und
- Fig. 4: einen Schnitt durch die Sicherungshülse.

Die in den Figuren dargestellte Steckverbindung 1 umfasst eine Steckaufnahme 2, einen in diese einsetzbaren Anschlusszapfen 3a sowie eine auf der Steckaufnahme 2 axial verschieblich angeordnete Sicherungshülse 4. Die Steckverbindung 1 ist zur Verbindung und/oder zum Anschließen von Waschflüssigkeitsleitungen eines Kfz ausgelegt. Der von der Steckaufnahme 2 umschlossene Anschlusszapfen 3a nimmt an seinem von der Steckaufnahme 2 abliegenden, nicht dargestellten Ende einen aufgewürgten Waschflüssigkeitsschlauch auf. Die Steckaufnahme 2 bildet einen hohlzylindrischen Aufnahmebereich 5 und ist in dem dargestellten Ausführungsbeispiel an ihrem von dem Aufnahmebereich 5 abliegenden Ende mit einem einstückig angeformten Anschlusszapfen 3b versehen. Der Anschlusszapfen 3b ist ebenso wie der Anschlusszapfen 3a im Querschnitt etwa pilzförmig ausgebildet und kann ebenfalls das Ende einer Schlauchleitung aufnehmen oder in ein entsprechend ausgebildetes Kupplungsgegenstück bzw. in eine entsprechend ausgebildete Steckaufnahme eingesetzt werden. Die zuvor beschriebenen Teile sind alle als Spritzgußteile aus thermoplastischem Material ausgebildet.

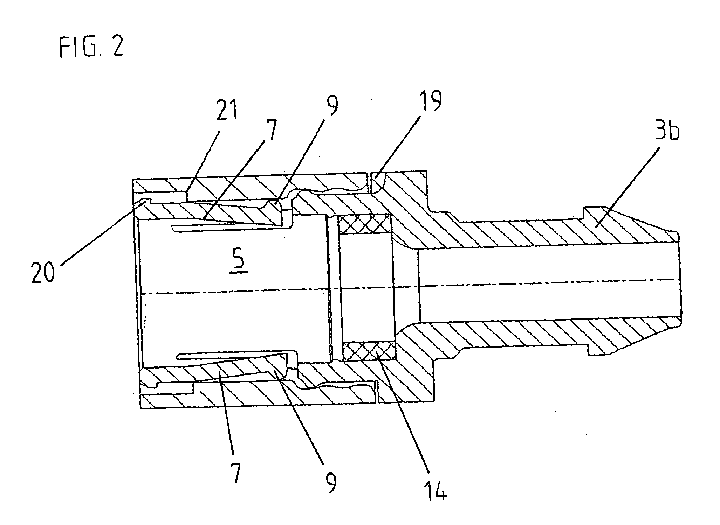

Wie dies insbesondere Fig. 2 zu entnehmen ist, sind in der Wandung 6 des zylinderförmig oder topfförmig ausgebildeten Aufnahmebereichs 5 der Steckaufnahme 2 als elastische Rastelemente zwei gegenüberliegend angeordnete Federzungen 7 ausgebildet. Die Federzungen 7 sind einstückig mit der Wandung 6 der Steckaufnahme 2 ausgebildet, und zwar durch jeweils etwa U-förmige Aussparungen 8 in der Wandung 6. Die Federzungen 7 sind jeweils mit nach außen weisenden Drucknasen 9 versehen, die wie nachstehend beschrieben mit der Innenkontur der Sicherungshülse 4 zusammenwirken.

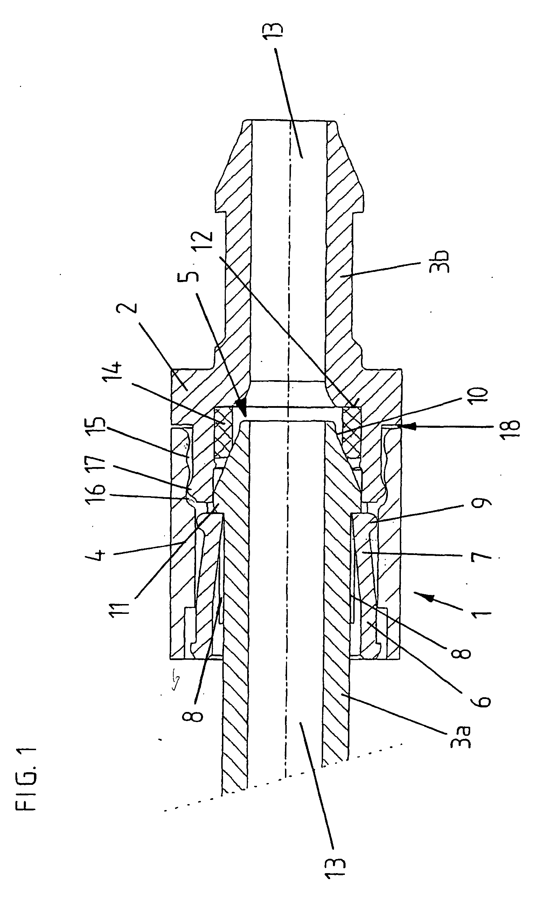

Wie aus den Fig. 1 und 2 ersichtlich ist, drückt die Sicherungshülse 4, die auf die Steckaufnahme 2 aufgesetzt ist und diese nach Art einer Manschette umgibt, in einer Funktionsstellung die Federzungen 7 über die Drucknasen 9 in den Innenquerschnitt des Aufnahmebereichs 5 hinein. Befindet sich die Sicherungshülse 4, wie in den Fig. 1 und 2 dargestellt, in verriegelter Stellung, bleiben die Federzungen 7 in ausgestellter Lage. Wird in dieser Rast- und Aufnahmestellung der Steckaufnahme 2 der Anschlusszapfen 3a in den Aufnahmebereich 5 eingeschoben, so trifft zunächst die konische Mantelfläche 10 des im Querschnitt etwa pilzförmig ausgebildeten Anschlusszapfens 3a auf die Federzungen 7. Wird die Einschubkraft des Anschlusszapfens 3a erhöht, so gleiten die innenliegenden Kanten der Federzungen 7 über die konische Mantelfläche 10 und federn hinter einem umlaufenden Absatz 11 des Anschlusszapfens 3a wieder in den Querschnitt des Aufnahmebereichs zurück. Der Einschub des Anschlusszapfens gegen die Federzungen ist unter radialer Verformung der Sicherungshülse aufgrund deren materialbedingten Elastizität möglich. Diese Stellung entspricht der in Fig. 1 dargestellten Stellung, in der ein Herausziehen des Anschlusszapfens 3a nicht mehr möglich ist, da die Stirnseiten der Federzungen gegen die Fläche des umlaufenden Absatzes 11 des Anschlusszapfens 3a anliegen.

Der Aufnahmebereich 5 der Steckaufnahme mündet im Bereich einer Durchmesserstufe 12 in eine Axialbohrung 13 zur Durchleitung von Waschflüssigkeit. Gegen die Durchmesserstufe 12 anliegend ist ein Dichtring 14 aus weichelastischem Material in den Aufnahmebereich 5 der Steckaufnahme eingesetzt.

In dem in Fig. 1 dargestellten montierten und verrasteten Zustand der Steckverbindung 1 liegt die konische Mantelfläche 10 des Anschlusszapfens 3a unter Vorspannung gegen den Dichtring 14 an, so dass ein spielfreier und dichtender Sitz der konischen Mantelfläche 10 in der Steckaufnahme 2 gewährleistet ist.

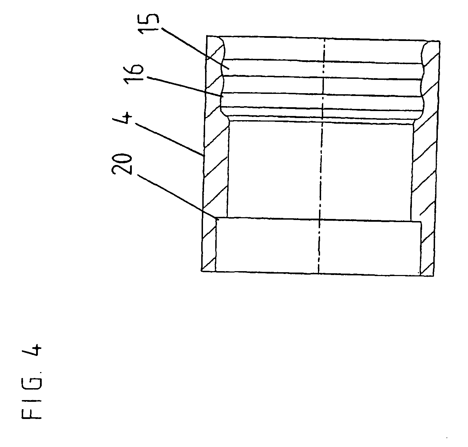

Wie insbesondere aus Fig. 4 ersichtlich ist, ist die Sicherungshülse 4 mit innen umlaufenden Rastnuten 15, 16 versehen, die mit einem komplementär ausgebildeten Rastvorsprung 17 auf der Außenfläche der Steckaufnahme 2 zusammenwirken und jeweils die Funktionsstellungen der Sicherungshülse 4 festlegen.

Eine erste Rastnute 15 auf der dem Anschlusszapfen 3b zugewandten Seite der Sicherungshülse 4 legt zusammen mit dem Rastvorsprung 17 die entriegelte Stellung der Sicherungshülse 4 fest, eine zweite in Auszugsrichtung des Anschlusszapfens 3a dahinterliegend angeordnete Rastnute 16 legt zusammen mit dem Rastvorsprung 17 die Verriegelungsstellung der Sicherungshülse 4 fest.

In der verriegelten Stellung der Sicherungshülse 4, die in den Fig. 1 und 2 dargestellt ist, liegt diese bündig unter Bildung eines kleinen Spaltes 18 gegen einen äußeren umlaufenden Absatz 19 der Steckaufnahme an.

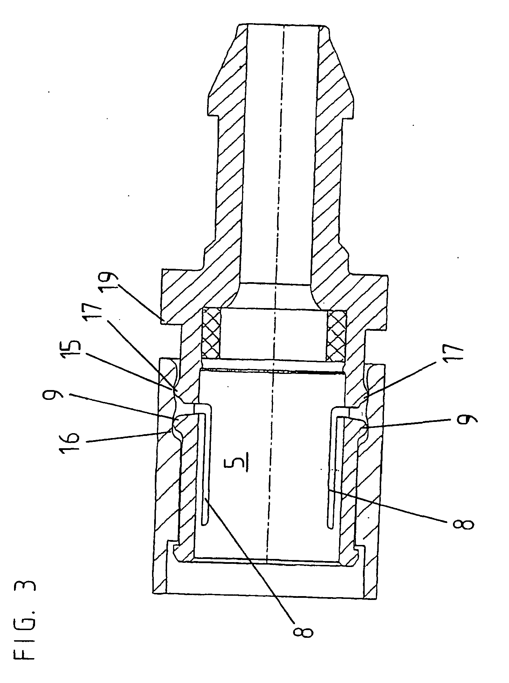

Durch Einsetzen eines Hebelwerkzeugs in den Spalt 18 lässt sich die Sicherungshülse 4 aus der Steckaufnahme 2 in die in Fig. 3 dargestellte Lage verschieben. In dieser Lage der Sicherungshülse 4 springen die Federzungen 7 in eine den Querschnitt des Aufnahmebereichs 5 freigebende Ausgangsstellung zurück, wobei die Drucknasen 9 jeweils in der durch die zweite Rastnut 16 gebildeten Vertiefung und der Rastvorsprung 17 in der durch die erste Rastnut 15 gebildeten Vertiefung liegen. In dieser Stellung der Sicherungshülse 4 ist der Anschlusszapfen 3a ohne nennenswerten Auszugswiderstand aus dem Aufnahmebereich 5 der Steckaufnahme 2 herausziehbar.

Die montagefertige Anlieferung der Steckaufnahme 2 erfolgt in dem in Fig. 2 dargestellten Zustand, in welchem die Federzungen 7 von der Sicherungshülse 4 in einer den Querschnitt des Aufnahmebereichs 5 verengenden Stellung gehalten werden. In dieser Stellung kann der Anschlusszapfen 3a eingesetzt und in der in Fig. 1 gezeigten Stellung verrastet werden.

Einschubseitig ist die Steckaufnahme 2 mit einem stirnseitig außen umlaufenden Sicherungskragen 20 versehen, der mit einem innen umlaufenden Absatz 21 der Sicherungshülse als Verliersicherung zusammenwirkt.

### Bezugzeichenliste

- 1: Steckverbindung
- 2: Steckaufnahme
- 3a, b: Anschlusszapfen
- 4: Sicherungshülse
- 5: Aufnahmebereich
- 6: Wandung
- 7: Federzungen
- 8: Aussparungen
- 9: Drucknasen
- 10: Mantelfläche
- 11: Absatz
- 12: Durchmesserstufe
- 13: Axialbohrung
- 14: Dichtring
- 15: erste Rastnute
- 16: zweite Rastnute
- 17: Rastvorsprung
- 18: Spalt
- 19: Absatz
- 20: Sicherungskragen
- 21: Absatz

## Patentansprüche

1. Steckverbindung für Schlauch- oder Rohrleitungen, zum Anschließen und/oder Verbinden von Waschflüssigkeitsleitungen eines Kfz, mit einer Steckaufnahme für einen Anschlusszapfen, wobei der Anschlusszapfen in der Steckaufnahme gegen axial wirkende Kräfte gesichert verrastbar ist, wobei die Steckaufnahme (2) federelastische oder federbelastete Rastelemente aufweist, die von einer auf der Steckaufnahme (2) axial verschieblich angeordneten Sicherungshülse (4) in einer ersten verriegelten Stellung gehalten werden und die in einer zweiten Stellung der Sicherungshülse ein Einfedern der Rastelemente in eine zurückgezogene Öffnungsstellung ermöglicht, wobei die Rastelemente in der ersten Stellung der Sicherungshülse unter Vorspannung gegen die Innenwandung derselben anliegen **dadurch gekennzeichnet, dass** die erste Stellung der Sicherungshülse deren Rast- und Aufnahmestellung für den Anschlusszapfen bildet und dass ein Einschieben des Anschlusszapfens in der Rast- und Aufnahmestellung der Sicherungshülse aufgrund deren materialbedingter Elastizität unter radialer Verformung derselben möglich ist.

2. Steckverbindung nach Anspruch 1, **dadurch gekennzeichnet, dass** als Rastelemente einstückig mit der Steckaufnahme (2) ausgebildete Federzungen (7) vorgesehen sind, die jeweils nach außen vorstehende Drucknasen (9) aufweisen.

3. Steckverbindung nach einem der Ansprüche 1 oder 2,
**dadurch gekennzeichnet, dass** die Sicherungshülse (4) unverlierbar auf der Steckaufnahme (2) angeordnet ist.

4. Steckverbindung nach einem der Ansprüche 1 bis 3,
**dadurch gekennzeichnet, dass** die Steckaufnahme (2) einen stirnseitig außen umlaufenden Sicherungskragen (20) aufweist, der mit einem innen umlaufenden Absatz (21) der Sicherungshülse (4) als axiale Sicherung derselben zusammenwirkt.

5. Steckverbindung nach einem der Ansprüche 1 bis 4,
**dadurch gekennzeichnet, dass** die Steckaufnahme (2) an ihrem Außenumfang mit wenigstens einem Rastvorsprung (17) versehen ist, der mit Rastnuten (15, 16) der Sicherungshülse (4) zusammenwirkt, die jeweils die Funktionsstellungen der Sicherungshülse (4) festlegen.

6. Steckverbindung nach einem der Ansprüche 1 bis 5,
**dadurch gekennzeichnet, dass** die Steckaufnahme (2) einen einstückig angeformten Anschlusszapfen (3b) aufweist, der entsprechend dem aufzunehmenden Anschlusszapfen (3a) ausgebildet ist.

7. Steckverbindung nach einem der Ansprüche 1 bis 6,
**dadurch gekennzeichnet, dass** die Axialbohrung (13) der Steckaufnahme (2) mit einer Durchmesserstufe (12) in einen Aufnahmebereich (5) mündet.

8. Steckverbindung nach Anspruch 7, **dadurch**
**gekennzeichnet, dass** im Bereich der Durchmesserstufe (12) der Steckaufnahme (2) ein Dichtsitz für den Anschlusszapfen (3a) vorgesehen ist.

## Claims

1. A plug connection for hoses or pipes, for joining and/or connecting washing fluid conduits of a motor vehicle, comprising a plug receiving means for a connecting plug portion, wherein the connecting plug portion is latchable in the plug receiving means to secure it against axially acting forces, wherein the plug receiving means (2) has resilient or spring-loaded latching elements which are held by a securing sleeve (4) arranged axially slidably on the plug receiving means (2) in a first locked position and which in a second position of the securing sleeve permits resilient movement of the latching elements into a retracted open position, wherein in the first position of the securing sleeve the latching elements bear under a bias against the inside wall thereof, **characterised in that** the first position of the securing sleeve forms the latching and receiving position thereof for the connecting plug portion, and that insertion of the connecting plug portion in the latching and receiving position of the securing sleeve is possible by virtue of the elasticity thereof due to the material thereof with radial deformation thereof.

2. A plug connection according to claim 1 **characterised in that** provided as the latching elements are spring tongue portions (7) which are formed integrally with the plug receiving means (2) and which each have respective outwardly projecting pressure noses (9).

3. A plug connection according to one of claims 1 and 2 **characterised in that** the securing sleeve (4) is arranged non-detachably on the plug receiving means (2).

4. A plug connection according to one of claims 1 to 3 **characterised in that** the plug receiving means (2) has an externally circumferentially extending securing collar (20) at the end, which co-operates with an internally circumferentially extending step (21) of the securing sleeve (24) as axial securing means thereof.

5. A plug connection according to one of claims 1 to 4 **characterised in that** the plug receiving means (2) is provided at its outside periphery with at least one latching projection (17) which co-operates with latching grooves (15, 16) of the securing sleeve (4), which each establish the respective operational positions of the securing sleeve (4).

6. A plug connection according to one of claims 1 to 5 **characterised in that** the plug receiving means (2) has a connecting plug portion (3b) which is integrally formed thereon and which is of a configuration corresponding to the connecting plug portion (3a) to be received.

7. A plug connection according to one of claims 1 to 6 **characterised in that** the axial bore (13) of the plug receiving means (2) opens with a diametral step (12) into a receiving region (5).

8. A plug connection according to claim 7 **characterised in that** a sealing seat for the connecting plug portion (3a) is provided in the region of the diametral step (12) of the plug receiving means (2).

## Revendications

1. Raccord pour des tuyaux ou des flexibles, destiné à joindre et/ou à raccorder des conduites de liquide de lavage d'un véhicule automobile, avec un logement embrochable pour un tenon de raccordement, sachant que le tenon de raccordement, peut être enclenché, sécurisé contre des forces agissant axialement, dans le logement embrochable, sachant que le logement embrochable (2) présente des éléments d'enclenchement chargés par ressort ou déformables, maintenus par un manchon de sécurité (4) disposé mobile axialement sur le logement embrochable (2) dans une première position de blocage et permettant, dans une deuxième position du manchon de sécurité, un enfoncement des éléments d'enclenchement dans une position rétractée d'ouverture, sachant que, dans la première position du manchon de sécurité, les éléments d'enclenchement sont placés, sous précontrainte, contre la paroi intérieure de celui-ci, **caractérisé en ce que** la première position du manchon de sécurité constitue ses positions de logement et d'enclenchement au niveau du tenon de raccordement, et **en ce qu'**une introduction du tenon de raccordement dans la position de logement et d'enclenchement du manchon de sécurité est possible du fait de l'élasticité de son matériau, sous déformation radiale du manchon de sécurité.

2. Raccord selon la revendication 1, **caractérisé en ce que** sont prévues, en tant qu'éléments d'enclenchement, des languettes à ressort (7) réalisées en une seule pièce avec le logement embrochable (2) et présentant respectivement des talons d'appui (9) en saillie vers l'extérieur.

3. Raccord selon l'une des revendications 1 ou 2, **caractérisé en ce que** le manchon de sécurité (4) est disposé imperdable sur le logement embrochable (2).

4. Raccord selon l'une quelconque des revendications 1 à 3, **caractérisé en ce que** le logement embrochable (2) présente un col de sécurité (20) circulaire extérieurement côté face et concourant avec un épaulement (21) circulaire intérieurement du manchon de sécurité (4) en tant que sécurité axiale de celui-ci.

5. Raccord selon l'une quelconque des revendications 1 à 4, **caractérisé en ce que** le logement embrochable (2) est muni au niveau de sa circonférence extérieure d'au moins une saillie d'enclenchement (17) concourant avec des rainures d'enclenchement (15, 16) du manchon de sécurité (4) fixant à chaque fois les positions de fonctionnement du manchon de sécurité (4).

6. Raccord selon l'une quelconque des revendications 1 à 5, **caractérisé en ce que** le logement embrochable (2) présente un tenon de raccordement (3b) réalisé en une seule pièce et formé en fonction du tenon de raccordement (3a) à recevoir.

7. Raccord selon l'une quelconque des revendications 1 à 6, **caractérisé en ce que** l'orifice axial (13) du logement embrochable (2) avec un changement du diamètre (12) débouche dans une zone de logement (5).

8. Raccord selon la revendication 7, **caractérisé en ce qu'**il est prévu, dans la zone de changement du diamètre (12) du logement embrochable (2), un siège étanche pour le tenon de raccordement (3a).
